# EUROPÄISCHE PATENTSCHRIFT

(11) **EP 1 001 383 B1**
(45) Veröffentlichungstag und Bekanntmachung des Hinweises auf die Patenterteilung: **24.05.2006**
(21) Anmeldenummer: 99250332.6
(22) Anmeldetag: 20.09.1999
(51) Int. Cl.: G07B 17/00

(54) **Anordnung und Verfahren zur Speicherung von Daten über eine Benutzung eines Endgerätes**
Apparatus and method for the storage of data concerning the usage of a terminal
Dispositif et procédé pour stocker des données d'utilisation d'un terminal

(30) Priorität: 09.10.1998 DE 19847947
(43) Veröffentlichungstag der Anmeldung: 17.05.2000
(73) Patentinhaber: Francotyp-Postalia GmbH, 16547 Birkenwerder (DE)
(72) Erfinder: Reisinger, Frank, 16515 Oranienburg (DE); Turner, Olaf, 12349 Berlin (DE)

(56) Entgegenhaltungen:
- EP-A- 0 516 403
- EP-A- 0 717 376
- US-A- 4 442 501
- US-A- 4 812 965
- US-A- 4 931 943
- US-A- 5 309 363
- US-A- 5 680 463
- US-A- 5 710 706
- US-A- 5 805 711

## Beschreibung

Die Erfindung betrifft eine Anordnung und ein Verfahren zur Speicherung von Daten über eine Benutzung eines Endgerätes gemäß des Oberbegriffs der Ansprüche 1 und 4 beziehungsweise des Anspruchs 7. Die Anordnung und das Verfahren sind insbesondere für Anwender von Frankiermaschinen geeignet.

Neuere Frankiermaschinen der Anmelderin setzen digital arbeitende Druckwerke ein. Beispielsweise weisen die Frankiermaschinen T1000 bzw. JetMail der Anmelderin Francotyp Postalia AG & Co. weltweit erstmals einen Thermotransferdrucker bzw. einen Tintenstrahldrucker auf. Damit ist es prinzipiell möglich, auf einen gefüllten Brief im Bereich des Frankierstempels auch Adressen und andere Informationen zu drucken, welche in einem entsprechenden Zusammenhang mit einer Dienstleistung stehen. So werden u.a. auch Wahldrucke beim Frankieren aufgedruckt, um die Versendungs-Art oder Form zu kennzeichnen.

Bereits aus dem EP 493 948 B1 ist eine Frankiermaschine bekannt, die die Versendungsart als separaten Wahldruckstempel zum Frankierstempel oder integriert mit abgedrucken kann. Sie ist mit einer Mehrzahl an Registern in einem gesicherten Modul zum Speichern von Buchhaltungsdaten ausgestattet, die sich auf den Gebrauch der Frankiermaschine zum Frankieren von Gegenständen beziehen. Ein erster Satz an Registern bezieht sich auf einen speziellen ersten Dienst und ein zweiter Satz an Registern bezieht sich auf einen speziellen zweiten Dienst, wobei über die Eingabemittel die speziellen Dienste auswählbar sind und die Buchhaltungsdaten des jeweils ausgewählten Dienstes aktualisiert werden. Es werden aber nur bestimmte Dienstleistungen zwecks Abrechnung erfaßt. Diese Abrechnungen geben dem Beförderer keine ausreichende Information über das Kundenverhalten.
Nun wird von einigen Postbehörden/Postbeförderern verlangt oder durch Preisnachlässe begünstigt, daß der Benutzer Ausdrucke über in der Frankiermaschine gespeicherte Betriebsabläufe, für Poststapel/Fracht begleitende Dokumente/Frachbrief oder in einer Zeitperiode tätigt, d.h. Abrechnungen bzw. Statistiken oder Quittungen über ein erfolgtes Nachladen zur Guthabenaufstockung anfertigt. Das Kundenverhalten vorauszusehen, wäre auch für zukünftige Postbeförderer interessant, welche neue Dienste für die Postbeförderung anbieten werden, die dann separat abgerechnet werden müssen.
Gemäß der EP 285 956 B1 ist eine Frankiermaschine mit einem speziellen Betriebsablaufspeicher und mit einem Anschluß für einen externen Drucker ausgestattet. Vom Benutzer wird verlangt, aus der gespeicherten periodischen Erfassung aller Daten nur bestimmte herauszusuchen und zu drucken. Dafür muß der Benutzer nicht nur einen separaten Drucker bereitsstellen sondern gegebenenfalls auch noch einen hohen Zeitaufwand für das Herauszusuchen und das Drucken der Daten reservieren. Seitens des Frankiermaschinenhersteller ist es außer dem erforderlich, genügend Speicherplatz in der Frankiermaschine dafür bereitzustellen, damit in geeigneten Zeitintervallen eine Aufzeichnung über den momentanen Zählstand vorgenommen werden kann.

Auch die Form der Speicherung kann an die Bedürfnisse einer Vielzahl von Benutzern ein und derselben Frankiermaschine angepaßt sein. So wird in einigen Maschinen von einer Klassenbildung in Form von Kostenstellen ausgegangen, die einzelnen Benutzergruppen zugeordnet sind. Bei der Frankiermaschine T1000 ist diese Erfassung auf 10 Kostenstellen beschränkt. Zum Ausdruck von entsprechenden Berichten auch ohne einen separaten externen Drucker wird in der DE 42 24 955 A1 ein Verfahren und Anordnung für einen internen Kostenstellendruck vorgeschlagen. Die für jede Kostenstelle erzeugbaren Ausdrucke enthalten nach Wahldrucken unterteilbare Auflistungen des Postgebrauchs der Frankiermaschine. Die Einsparung des zusätzlichen Druckers ist für die Benutzer vorteilhaft. Für die Benutzer ist es aber unzumutbar, auf Verlangen der Postbeförderer bzw. Datenzentrale immer wieder Listen mit Daten über die Benutzung der Frankiermaschine auszudrucken. Denn während des Ausdruckens von Listen der Kostenstellendaten mittels des frankiermaschineninternen Druckkopfes kann natürlich nicht frankiert werden.

Aus der FR 2 665 003 B1 ist eine Einrichtung zum Verfolgen des Postgebrauches eines elektronischen Frankiersystems bekannt, das mit einer Zentrale in Verbindung steht, welche elektronische Mitteilungen austauschen. Neben den Bytes umfaßt das Mitteilungsformat Informationen zur Identifikation, zum Registerstand und zum Kreditstand sowie eine Anzahl an zusätzlichen Bytes zur statistischen Reihenfolge. Die Bytes zur statistischen Reihenfolge enthalten eine Aufgliederung nach Portowerten, nach Gewichten oder nach Zielorten der frankierten Postsendungen. Ein Teil der Anweisungen zur statistischen Reihenfolge kann während der Kommunikation mit der Zentrale modifiziert werden. Die Modifizierung einer Anweisung muß aber vorab erfolgen, bevor eine statistische Erfassung gestartet wird. Die Kommunikation erfolgt per Telefonleitung oder per Elektronikmodul, welches körperlich zum Kommunikationspartner transportiert werden muß. Für die Datenzentrale ist es schwierig das Kundenverhalten zu ermitteln, weil nach der Vorgabe der Anweisungen, gemäß letzterer nur bestimmte Daten gespeichert werden.

Durch die Vielzahl an Dienstleistungen ist nicht immer klar ersichtlich, für welche der Dienstleitungen die Anbieterkapazität noch ausgebaut werden müßte. Teilweise gestatten veraltete Telekommunikationsanlagen keinen hohen Datendurchsatz. Nun wurde in einer nicht vorveröffentlichten deutschen Patentanmeldung 19731304.3-53 vorgeschlagen, in der Datenzentrale wählbare Verknüpfungsanweisungen zur Klassenbildung zu erzeugen und in Form von neuen Statistikanweisungsdaten zur Frankiermaschine zu übertragen. Die Bildung eines neuen Statistikmodus erfolgt in der Frankiermaschine aufgrund der neuen Statistikanweisungsdaten und zeitlich vor der Benutzung von Funktionen und Dienstleistungen und deren statistischen Erfassung im Speicher der Frankiermaschine. Ein Vorteil ist der geringere Speicherplatzbedarf durch eine durch die Ver knüpfung erzielbare Vorverdichtung der Daten. Vorteilhaft ist auch, daß eine Übermittlung von vorverdichteten Daten zur Datenzentrale den Ablauf nicht stört, da deren Übermittlung nur wenig Zeit in Anspruch nimmt. Im Falle der Vorverdichtung ist viel über das spezielle aber nur wenig über das grundsätzliche Benutzerverhalten in Erfahrung zu bringen. Anderenfalls müßte die statistische Erfassung sehr breit angelegt werden, was aber wiederum einen erhöhten Speicherplatzbedarf verursacht. Somit ist es nach wie vor erforderlich, bestimmte Begrenzungen zu vereinbaren. Aus der EP 717 376 A2 ist eine Frankiermaschine mit Statistikprogramm bekannt, welche die Übertragung von statistischen Daten an die Datenzentrale per Modem und das Ändern von Parametern in der Frankiermaschine für die statistische Datenerfassung durch Herunterladen von neuen Parametern von der Datenzentrale zur Definition der Klassengrenzen durchführt. Die Möglichkeiten zum Durchführen einer Statistik sind jedoch auf Portowertklassen beschränkt.

Die Aufgabe der Erfindung ist es, eine optimale Speicherung von Daten in einem Endgerät und eine schnelle Kommunikation zu einer entfernten Datenzentrale zu schaffen, wobei die statistische Erfassung eine maximale Breite erreichen darf, so daß die Anweisungen der Datenzentrale zur Speicherung entfallen können.

Unbeeinflußt von der Speicherung und Übertragung von Benutzungsdaten soll in einem Dienstleistungsmodus die Benutzung des Endgerätes für Dienstleistungen ermöglicht werden.

Die Aufgabe wird mit den Merkmalen der Ansprüche 1, 4 und 7 gelöst.

Da keine Anweisungen der Datenzentrale zur Beschränkung der Speicherung existieren, besitzt das Endgerät im Programmspeicher ein Programm zur Speicherung aktueller Benutzungsdaten mit automatischer Klassenbildung für die statistische Erfassung und zu deren Übertragung an eine entfernte Datenzentrale, wenn der Statistikspeicher voll ist.

Die Erfindung geht von der Verfügbarkeit preisgünstiger Speicher mit einer sehr hohen Speicherkapazität aus, um Benutzungsdaten eines Systems statistisch zu erfassen. Die Benutzungsdaten beziehen sich auf Informationen über vom Benutzer gewählte Eigenschaften eines System oder Merkmale eines Gerätes. Die Postbeförderung bzw. der Versand von Poststücken durch einen öffentlichen oder privaten Postbeförderer ist dabei nur eine mögliche Dienstleistungsart eines Dienstleistungsbetriebes. Unter Gerät des Versandsystems wird ein entfernt vom Dienstleister befindliches Terminal bzw. ein beim Kunden stehendes Endgerät eines Frankiersystems verstanden. Unter Eigenschaften des Versandsystems bzw. (Kunden/End-)Gerätes sollen hierbei spezifische Benutzereingaben und spezifische automatisch vorgenommene Eingaben verstanden werden, die in Verbindung mit dem Auftrag stehen, den ein Kunde dem Dienstleister erteilt. Vorteilhaft kann durch eine platzsparende Speicherplatzverwaltung von Benutzungsdaten einerseits die Speicherkapazität eines Statistikspeichers optimal genutzt, d.h. geringer ange-setzt werden, als bei einer bekannten Speicherung von Benutzungsinformationen in statistischen Klassen. Andererseits kann bei voller Ausschöpfung der verfügbaren Speicherkapazität die Anzahl der Speicherungen erhöht, d.h. das Terminal bzw. Gerät eines Frankiersystems kann eine längere Zeit betrieben werden, ehe eine Kommunikation mit der Datenzentrale erforderlich ist. Kurz vor oder beim Speicherüberlauf des Statistikspeichers werden die gespeicherten Daten in einen Speicher der Datenzentrale geladen. Ausgehend von den verbesserten Möglichkeiten einer Kommunikation mit einer hohen Baud-Rate ist für die Kommunikation nur eine relativ kurze Zeitspanne nötig, um alle Daten aus dem Endgerät zur Datenzentrale zu übertragen. Bei erfolgreicher Datenübertragung vom Statistikspeicher zum entfernten Speicher der Datenzentrale kann die ursprüngliche Speicherkapazität durch Löschen des Statistikspeichers wieder hergestellt werden.

Das Endgerät ist insbesondere eine Frankiermaschine, ein Gerät eines Frankier- und/oder Postverarbeitungssystem, ein PC-Frankierer oder irgendein Peripheriegerät eines Systems, welches selbst eine Dienstleistung erbringt bzw. die Nutzung der Dienstleistung eines Dritten gestattet. Eine Aufzeichnung über einzelne Ereignisse der Benutzung wird in einem entsprechenden Dienstleistungsmodus erstellt. Die Benutzungsinformationen kennzeichnen vorzugsweise den postalischen Gebrauch der Frankiermaschine bzw. eines Frankiersystems. Der Frankiermodus umfaßt erfindungsgemäß einen Statistikmodus mit automatischer Klassenbildung bei der Abspeicherung der aktuellen Benutzungsinformation. Es ist vorgesehen, daß eine Frankiermaschine während Ihres Betreibens bzw. im Ergebnis Ihres Betreibens im Frankiermodus Benutzungsinformationen sparsam zugehörig zu einer Klasse speichert, die dem aktuellen Benutzerverhalten entspricht. Automatisch wird eine neue Klasse generiert und ein neuer Datensatz gespeichert, wenn die aktuellen Benutzungsinformationen nicht einer bestehenden Klasse zugeordnet werden können. Wenn aber eine entsprechende Klasse für Benutzungsinformationen bereits generiert worden ist, welcher die aktuellen Benutzungsinformationen zuordenbar sind, dann wird nur ein der Klasse zugehöriger Stückzähler inkrementiert und die neue Stückzahl im bestehenden Datensatz gespeichert. Die Übertragung der Datensätze an die Datenzentrale erfolgt nach Zeitablauf oder bei Überlauf des Statistikspeichers automatisch.

Es ist vorgesehen, daß die Übertragung per Modem erfolgt und daß eine Datenkompression bei der Übertragung durchgeführt wird.

Vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:

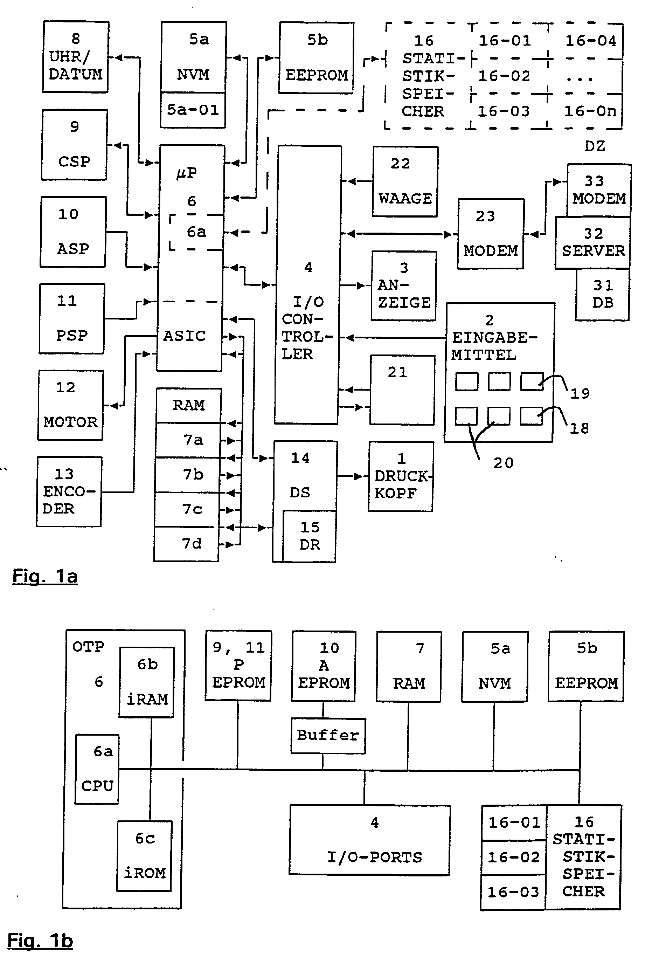

- Figur 1a,: Blockschaltbild einer Frankiermaschine,
- Figur 1 b,: Variante mit separaten Statistikspeicher und mit OTP in der Steuereinrichtung eines Endgerätes,
- Figur 2,: Gesamtablaufplan für eine Frankiermaschine.
- Figur 3,: Darstellung einer Klasse COMm,
- Figur 4,: Flußplan zur statistischen Speicherung mit automatischer Klassenbildung,
- Figur 5,: Darstellung eines Speicherplatzes für einen Parameter,
- Figur 6,: Darstellung eines im Statistikspeicher gespeicherten Datensatzes des Klasse COMm mit nur einem Parameter,
- Figur 7,: Routine zur Wiederherstellung der Speicherkapazität,
- Figur 8,: Darstellung einer Transaktionsanforderungsroutine.

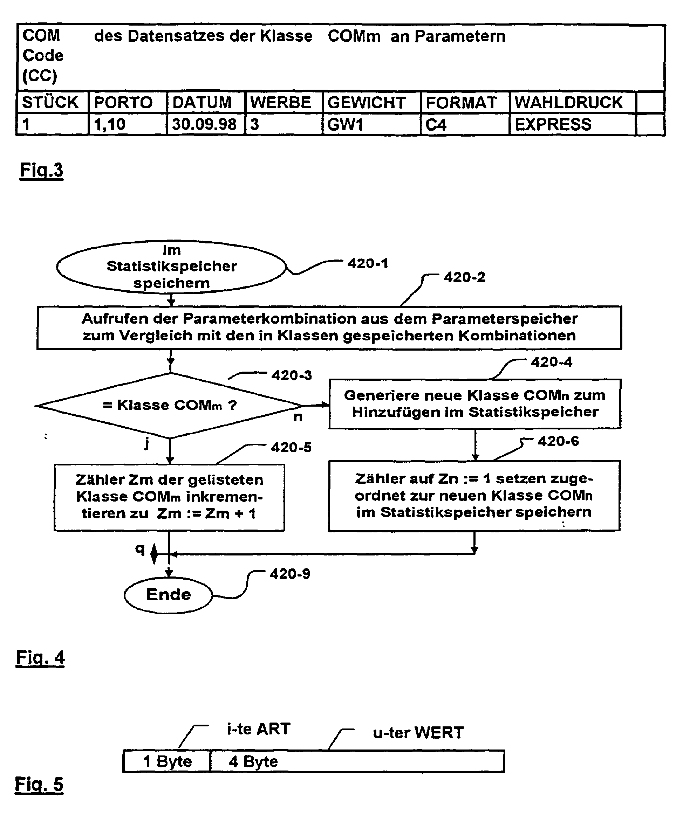

Die Figur 1a zeigt ein Blockschaltbild der mit der Erfindung ausgerüsteten Frankiermaschine. Sie ist ausgestattet mit einem Druckermodul 1 für ein vollelektronisch erzeugtes Frankierbild, mit mindestens einem mehrere Betätigungselemente aufweisenden Eingabemittel 2, einer Anzeigeeinheit 3, einem die Kommunikation mit einer Datenzentrale herstellenden MODEM 23, weitere Eingabemittel 21 bzw. Waage 22 welche über einen Ein/Ausgabe-Steuermodul 4 mit einer Steuereinrichtung 6 gekoppelt sind und mit nichtflüchtigen Speichern 5a, 5b bzw. 9, 10 und 11 für Daten bzw. Programme, welche die variablen bzw. die konstanten Teile des Frankier bildes einschließen.
In der deutschen Patentanmeldung DE 19534530 A1 werden nähere Ausführungen zu einzelnen Funktionen der Mittel gemacht. Ein Charakterspeicher 9 liefert die nötigen Druckdaten für die variablen Teile des Frankierbildes zu einen flüchtigen Arbeitsspeicher 7. Die Steuereinrichtung 6 weist einen Mikroprozessor µP auf, der mit dem Ein/Ausgabe-Steuermodul 4, mit dem Charakterspeicher 9, mit dem flüchtigen Arbeitsspeicher 7 und mit nichtflüchtigen Arbeitsspeichern 5a, 5b (mit internen Statistikspeicher) bzw. (gestrichelt gezeichnet) mit einem zusätzlichen Statistikspeicher 16, mit einem Programmspeicher 11, mit dem Motor einer Transport- bzw. Vorschubvorrichtung ggf. mit Streifenauslösung 12, einem Encoder (Codierscheibe) 13 sowie mit einem Kalender- bzw. Uhren/Datums-Baustein 8 in Verbindung steht. Derjenige Speicherbaustein, welcher den nichtflüchtigen Arbeitsspeicher 5b umfaßt, kann beispielsweise ein EEPROM sein, der durch mindestens eine zusätzliche Maßnahme, beispielsweise Aufkleben auf der Leiterplatte, Versiegeln oder Vergießen mit Epoxidharz, gegen Entnahme gesichert wird. Im nichtflüchtigen Speicher 5a werden in einem dafür vorgesehenen Bereich 5a-01 die aktuellen Parameter gespeichert, welche mindestens den nach dem Frankieren als variable Daten auf dem Poststück aufgedruckt sind. Die Darstellung eines Speicherplatzes für einen solchen Parameterspeicher 5a-01 wird anhand der Fig.5 näher erläutert.

Zu einer ersten Speicherung der Statistikdaten werden die aktuellen Benutzungsdaten aus dem Parameterspeicher entnommen und bilden eine Klasse an Parametern. Letztere wird anhand der Fig.3 später noch näher erläutert. Die Speicherung der Statistikdaten kann beispielsweise separat in einem Statistikspeicher 16 oder ebenfalls innerhalb des nichtflüchtigen Speichers 5a realisiert werden, in welchem besondere Speicherbereiche dafür bereitgestellt werden. Bei einer speziellen durch einen anderen Dienstleister bereitgestellten Dienstleistung sind nicht gezeigte separate Speicherbereiche für Benutzungsdaten oder separate Speicherbausteine vorgesehen. Die einzelnen Speicher können in mehreren physikalisch getrennten oder in nicht gezeigter Weise in wenigen Bausteinen zusammengefaßt verwirklicht sein.
Die betreffenden Benutzungsdaten werden vorzugsweise in mindestens einem separaten Speicherbereich gespeichert, der eine Vielzahl an Speicherplätzen 16-01 bis 16-0n einschließt. Im Ausführungsbeispiel nach Fig.1a ist der Speicherbaustein 16 dem Dienstleister und sein Speicherbereich allen Kostenstellen zugeordnet. Bei einer Vielzahl an Speicherbereichen kann jeder Speicherbereich jeweils einer Kostenstelle zugeordnet sein. Pro Speicherplatz sind eine Anzahl an Speicherzellen entsprechend der Anzahl zu speichernder Informationseinheiten Bits vom Mikroprozessor µP adressierbar. Auf die vorgenannten Informationseinheiten Bits können folgende Informationen, wie Anzahl, Portowert, Datum, Werbe-Klischee-Nummer, Gewicht, Format, Wahldrucke für Versandinformationen (Form, Art, Ziel) und andere bestimmte Einstell-Zustände abgebildet werden.

In der Figur 1b sind Details des Blockschaltbildes einer anderen Variante eines Endgerätes mit One Time programmable (OTP-) Prozessor in der Steuereinrichtung gezeigt. Das in Figur 1 b gezeigte Blockschaltbild gilt im Prinzip auch für eine beliebige elektronische Steuereinheit, an welche ein nicht gezeigter Drucker und ein nicht gezeigtes Modem angeschlossen werden kann. Erfindungsgemäß ist vorgesehen, daß die elektronische Steuereinheit mindestens einen separaten Speicherbereich für Benutzungsdaten bereitstellt, welche in Zeitabständen per Modem zur Datenzentrale übermittelt werden können. Alternativ kann eine elektronische Frankiermaschine in einer hier nicht gezeigten Variante auch durch einen Personalcomputer mit angeschlossenem handelsüblichen Drucker realisiert werden.

Eine derartige Anordnung wird auch als PC-Frankierer bezeichnet.
Der Drucker kann alternativ aber auch für die Hochgeschwindigkeits-Postverarbeitung ausgelegt werden. Ein Postverarbeitungssystem mit einer über Personalcomputer gesteuerten druckenden Maschinen-Basisstation wird in der nicht vorveröffentlichten deutschen Patentanmeldung DE 19711998.0 erläutert.

Bereits in einer im EP 716 398 A2 vorgeschlagenen Ausführungsform einer Frankiermaschine wird ein geeigneter OTP-Prozessor eingesetzt. Er ist mit einem nichtflüchtigen Speicher zur Abrechnung und mit einem ASIC als Schnittstelle zu einer Base verbunden. Einzelheiten dieser Ausführungsform wurden in der deutschen Patentanmeldung DE 19534530 A1 mit dem Titel: Verfahren zur Absicherung von Daten und Programmcode einer elektronischen Frankiermaschine, sowie außerdem in der deutschen Patentanmeldung DE 19731304.3-53 mit dem Titel: Verfahren zur Statistikmodusnachladung und zur statistischen Erfassung nach Statistikklassen bei der Speicherung eines Datensatzes, erläutert.

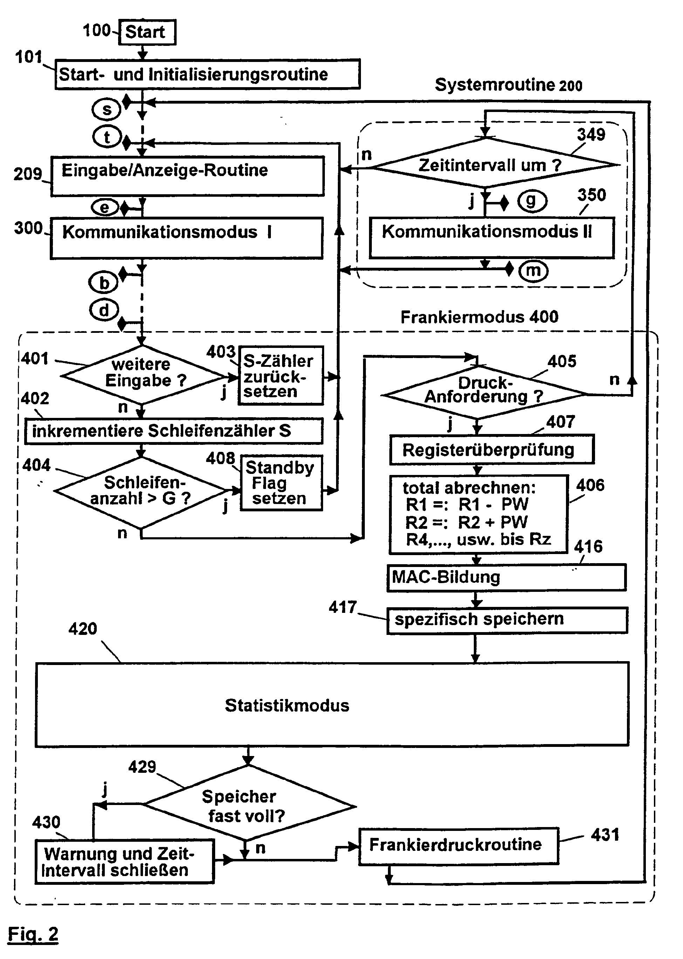

Die Figur 2 zeigt einen Gesamtablaufplan für eine Frankiermaschine mit erfindungsgemäßen Statistikmodus 420 innerhalb eines Frankiermodus 400. Es ist vorgesehen, daß nach einem Einschalten der Frankiermaschine im Schritt Start 100 innerhalb einer Startroutine 101 eine Funktionsprüfung mit anschließender Initialisierung erfolgt. Ein Programmcode im nichtlesbaren internen OTP-ROM erlaubt nun mehrere vorteilhafte Startsicherheitsüberprüfungsroutinen, wie sie in der deutschen Patentanmeldung DE 19534530 näher dargelegt wurden. Der Ablauf weist nach einer Startroutine 101 eine Systemroutine 200 mit einem Punkt s auf.
Es ist vorgesehen, daß das Endgerät eine Frankiermaschine mit einem Mikroprozessor 6 ist, der programmiert ist, innerhalb einer Systemroutine 200 in eine Eingabe/ Anzeige-Routine 209 und in einen Frankiermodus 400 einzutreten, wobei die Eingaberoutine 209 zur Erfassung von aktuellen Benutzungsdaten durch den Mikroprozessor der Frankiermaschine im Parameterspeicher 5a-01, Aufforderungsschritte zur Eingabe einer mindestens den Frankierwert, das Gewicht oder den Versand betreffenden Benutzungsinformation umfaßt.

Der Ablauf wird nach der Eingabe/ Anzeige-Routine 209 fortgesetzt, mit Verzweigung auf einen Kommunikationsmodus 300 und mit dem modifizierten Frankiermodus 400. In der deutschen Patentanmeldung DE 19731304.3-53 wird der Schritt 209 für die Eingabe/Anzeige-Routine von Eigenschaften eines Systems oder Merkmale des Gerätes, der Kommunikationsmodus, der Frankiermodus und ein Statistikmodus näher erläutert. Die Schritte 401 bis 407 können im modifizierten Frankiermodus 400 prinzipiell so abgearbeitet, wie ebenda erläutert wurde. Die Abrechnungsdaten werden im Li-Batterie-gestützten NV-RAM 5a in - nicht gezeigten - separaten Speicherbereichen gespeichert. Es folgen eine Anzahl nicht gezeigter Schritte zur Bildung 415 einer Prüfsumme und deren DES-Verschlüsselung im Schritt 416 zu einem MAC (Message Authentification Code). Im Schritt 417 wird auch der MAC zugehörig zu den Abrechnungsdaten befördererspezifisch unter einer Kostenstellennummer gespeichert.

Der erfindungsgemäße Statistikmodus Schritt 420 wird innerhalb eines Frankiermodus 400 vom OTP-Prozessor oder vom separaten Mikroprozessor 6 des Meters aufgerufen. Die Speicherung der Benutzungsdaten erfolgt jedoch immer separat von den Abrechnungsdaten. Eine solche Anordnung besteht mindestens aus einem Speicher und einem Mikroprozessor, wobei erfindungsgemäß ein Parameterspeicher 5a-01 für aktuelle Benutzungsdaten und ein Statistikspeicher 16 für eine statistische Speicherung von Benutzungsdaten gebildet werden, wobei die vorgenannten Speicher nichtflüchtige Speicher sind. Die Zusammenstellung aktueller Benutzungsdaten wird nachfolgend auch als Parameterkombination bezeichnet. Nachdem im Schritt 405 ein Signal für eine Druckanforderung detektiert wurde, und die zur Abrechnungsroutine zugehörigen Schritte 406 bis 417 durchlaufen worden sind, wird vom Mikroprozessor festgestellt (420-1), daß die Abarbeitung zur statistischen Speicherung der Benutzungsdaten im Statistikmodus 420 beginnen kann.
Es ist vorgesehen, daß der Prozessor mit einem Statistikspeicher 16 für eine statistische Speicherung von in Statistikklassen gespeicherten Benutzungsdaten und mit einem Programmspeicher verbunden ist und mit einem Programm programmiert ist, zur automatischen Klassenbildung und zur statistischen Speicherung der Benutzungsdaten und zugehöriger Speicherung eines Zählerstandes.

In der Figur 4 ist ein Flußplan zur statistischen Speicherung mit der erfindungsgemäßen automatischen Klassenbildung dargestellt. Dabei werden folgende Schritte durchgeführt:
- Eintritt 420-1 in den Statistikmodus 420 zur statistischen Speicherung der Benutzungsdaten,
- Aufrufen 420-2 einer aktuellen Parameterkombination aus dem Parameterspeicher 5a-01 und Durchführen eines Vergleichs 420-3, ob entsprechend dieser Parameterkombination schon eine Statistikklasse COMₘ von gespeicherten Kombinationen im Statistikspeicher 16 existiert, wobei jeder gespeicherten Kombination ein Zählerstand Zₘ zugeordnet ist,
- Erhöhe 420-5 den Zählerstand Zₘ im Statistikspeicher 16 um eins, wenn im Schritt 420-3 festgestellt wird, daß eine Statistikklasse gemäß der oben genannten gespeicherten Kombinationen im Statistikspeicher 16 existiert, oder
- automatische Bildung 420-4 einer neuen Statistikklasse COMₙ und deren Speicherung im Statistikspeicher 16 und Setzen eines zur neuen Statistikklasse COMₙ zugeordneten Zahlerstandes Zₙ auf einen Startwert (beispielsweise = 1).

Optional wird nach dem Ende 420-9 geprüft, ob noch genug Platz im Statistikspeicher für Benutzungsdaten vorhanden ist. Wenn das aber nicht der Fall ist, kann der Mikroprozessor automatisch eine Verbindung zur Datenzentrale herstellen, um die Statistikdaten vom Speicher der Frankiermaschine FM in einen Speicher der Datenzentrale DZ zu laden. Alternativ kann die Frankiermaschine dabei auf eine Benutzereingabe warten, um in den Kommunikationsmodus I einzutreten.
Bei dem vorgenannten Vergleich im Statistikmodus wertet der Mikroprozessor alle gespeicherten Datensätze aus. Einem jeden Datensatz kann ein einzigartiger Code, Namen oder eine Nummer zugeordnet sein, welcher den Datensatz kennzeichnet. Diese Kennzeichnung belegt ein erstes Byte des ersten Speicherplatzes 16-01. Im zweiten Speicherplatz 16-02 existiert mindestens eine zugeordnete Anzahl an Speicherzellen als Zähler zur Speicherung einer nachfolgenden gleichartigen Benutzung. Der Zähler benötigt vier Byte an Speicherzellen im zweiten Speicherplatz 16-02. Für die Art jedes Parameters wird ein Byte und für seinen Wert werden weitere 4 Bytes benötigt.

Die Figur 3 zeigt die Darstellung einer m-ten Klasse COMm an aktuellen Parametern. Jeder Klasse an Parameterdaten ist eine Stückzahl zugeordnet. Der im Statistikspeicher 16 gespeicherte Datensatz besteht aus Daten für den Portowert, Datum, Werbe-Klischee-Nummer, Gewicht, Format, Wahldrucke oder anderen Parameterdaten. Darüber hinaus kann die Klasse mit kennzeichnenden Daten gekennzeichnet werden. Ein Datensatz besteht im Grenzfall nur aus einer Kennzeichnung CC (COM Code), Daten für die Stückzahl, die Art und den Wert eines Parameters. Das ist beispielsweise der Fall, wenn entweder nicht mehr Parameter aus dem Parameterspeicher eingegeben oder weitere Parameter nicht berücksichtigt werden konnten.

Die Figur 5 zeigt die Darstellung eines Speicherplatzes im Parameterspeicher für einen solchen Grenzfall. Ein erstes Byte ist für eine Kennung der i-ten Art für die Arten 1, 2, ..., i, ..., k und vier Bytes sind für den u-ten Wert für die Werte 1, 2, ..., u, ...,z vorgesehen. Die entsprechend in Speicherplätzen gelisteten Parameterdaten und bleiben nichtflüchtig bis zur nächsten Änderung im Parameterspeicher 5a-01 gespeichert. Dieser in einem Speicherbereich des nichtflüchtigen Speichers 5a gebildete Parameterspeicher 5a-01 kann natürlich auch als separater Parameter speicher ausgeführt werden.

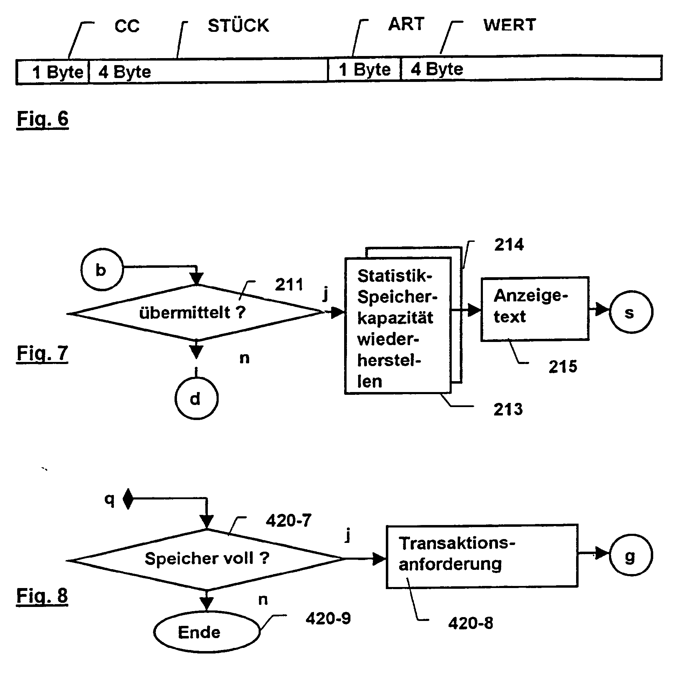

Anhand der Figur 6 wird die Darstellung eines im Statistikspeicher gespeicherten Datensatzes des Klasse COMm mit nur einem Parameter erläutert. Ein erstes Byte ist für eine Kennung der Statistikklasse, vier Bytes sind für den Zählerstand, ein weiteres Byte ist für die Art des ersten Parameters und vier Bytes sind für den Wert des ersten Parameters vorgesehen. Ein solcher Grenzfall ist in den Figuren 5 und 6 natürlich nur aus Gründen der Vereinfachung dargestellt worden. Die Bytes für die Art und den Wert weiterer Parameter werden einfach am Ende des Datensatzes angehängt. Das ist möglich, weil die Verknüpfung eine Konjunktion bildet. Das weitere einzelne Byte für die Art eines zweiten Parameters und die weiteren vier Bytes für den Wert des zweiten Parameters bilden mindestens mit dem Byte für die Art des ersten Parameters und mit den vier Bytes für den Wert des ersten Parameters die vorgenannte Parameterkombination.
Die verfügbare Speicherkapazität im Statistikspeicher beträgt beispielsweise 20 kByte. Sie wird durch die platzsparende Speicherplatzverwaltung optimal genutzt. Eine statistische Auswertung der Benutzungsinformationen zu einer Dienstleistung kann periodisch erfolgen.

Die Benutzung der Frankiermaschine entsprechend der Dienstleistung Frankieren für den Versand von Poststücken ergibt mindestens eine bestimmte Benutzungsinformation. Die zur Erstellung einer Statistik in der Datenzentrale benötigten Benutzungsinformationen werden in Form von komprimierten Datensätzen per Modem 23 zur Datenzentrale übermittelt.
Durch eine vom Benutzer eingegebene Kostenstelle wird ein Speicherbereich ausgewählt, um bei einer ersten Benutzung "Frankieren" als erste Benutzungsinformation mindestens den Portowert auf einem der Speicherplatze im Statistikspeicher 16 zu speichern. Es sind keine festen Speicherplätze für Werte oder Nummern vorgesehen, sondern die Datensätze werden aufeinanderfolgend gespeichert. Eine einzelne oder eine Anzahl an Benutzungsinformationen kann eine Klasse bilden. Der Klasse ist ein Zähler zugeordnet, welcher inkrementiert wird, wenn die nachfolgende Benutzung die gleiche Klasse an Benutzungsinformation ergibt. Wenn aber die nachfolgende Benutzung eine neue Benutzung ergibt, für die noch keine Klasse gebildet wurde, dann wird automatisch eine neue Klasse generiert und ein entsprechender Datensatz im Statistikspeicher hinzugefügt. Die Speicherplatzeinsparung resultiert einerseits aus der Stückzählung bei einer unmittelbar aufeinanderfolgenden gleichartigen Benutzung der Frankiermaschine und andererseits aus der Abspeicherung von Datensätzen variabler Länge. Die Länge ist abhängig davon, ob nur eine oder eine Vielzahl an unterschiedlichen Benutzungsinformation auf den nachfolgenden Speicherplätzen gespeichert werden.

Die Figur 2 zeigt nach dem Statistikmodus 420 folgende optionale Schritte zur Überprüfung der noch verfügbaren Speicherkapazität des Statistikspeichers 16. Bei einer jedem Kommunikation mit der Datenzentrale kann ein Zeitintervall vereinbart werden, damit sich die Frankiermaschine nach Zeitablauf wieder bei der Datenzentrale meldet. Im Schritt 429 wird der noch verfügbare Speicherplatz im Speicherbereich des Benutzungsspeichers 16 überprüft. Ist der verfügbare Speicherplatz für eine Speicherung eines nächsten Datensatzes noch ausreichend, dann wird zum Schritt 431 mit der an sich bekannten Frankierdruckroutine verzweigt. Andererseits, wenn der Statistikspeicher fast voll ist, wird zum Schritt 430 verzweigt, um eine Warnung zu generieren und um ggf. das Zeitintervall der Speicherung von Benutzungsinformationen zu schließen, bevor zum Schritt 431 mit der Frankierdruckroutine verzweigt wird. Die Frankierdruckroutine wird in an sich bekannter Weise vorzugsweise vom Mikroprozessor 6 durchgeführt. Da der Mikroprozessor in der Systemroutine die Druckanforderung 405 ständig und schneller abfragt, als ein zu frankierendes Poststück nachgeliefert werden kann, ist das Durchlaufen des Abfrageschrittes 349 gesichert. Somit kann auf indirekte Weise eine Kommunikation mit Übermittlung der Daten zur Datenzentrale und einem anschließenden Speicherbereichslöschen automatisch ausgelöst werden. Alternativ kann nach der Anzeige auf eine Benutzereingabe gewartet werden, um eine Kommunikation zur Datenzentrale auszulösen.
Der Mikroprozessor 6 ist programmiert in einen Statistikmodus 420 und in einen Kommunikationsmodus 300 bzw. 350 einzutreten, wobei der Mikroprozessor 6 im Kommunikationsmodus zur Datenübertragung vom Statistikspeicher 16 zu einem entfernten Speicher 31 programmiert ist, wobei die Datenübertragung erfolgt, um entfernt vom Endgerät eine statistische Auswertung der Benutzungsdaten vorzunehmen. Ein Aufruf einer Routine zur statistischen Auswertung in der Frankiermaschine per Userinterface mit den Eingabemitteln 2, 21 und mit der Anzeige 3 ist optional möglich.

Es ist vorgesehen, daß kurz vor oder beim Speicherüberlauf die im Statistikspeicher des Endgerätes gespeicherten Benutzungsdaten an die Datenzentrale übermittelt werden. Der Speicherbereich kann dann für neue Benutzungsdaten frei gemacht werden. Im Unterschied zur Behandlung der Abrechnungsdaten dürfen die Benutzungsdaten nach deren Übermittlung an die Datenzentrale vom OTP-Prozessor oder vom Mikroprozessor 6 des Meters gelöscht werden. Es ist nach dem Beenden der Datenübertragung zu dem entfernten Speicher 31 vorgesehen, daß der Mikroprozessor 6 zur Wiederherstellung der erforderlichen Speicherkapazität im Statistikspeicher 16 programmiert ist.

Die Figur 7 zeigt eine Routine zum Wiederherstellen der Statistikspeicherkapazität. Nach dem Kommunikationsmodus 300 wird der Punkt b erreicht (Fig.2). Zwischen den Punkten b und d des in der Fig.2 gezeigten Flußplanes können weitere Abfragen liegen, bevor ein Dienstleistungsmodus erreicht wird, der den erfindungsgemäßen Statistikmodus 420 einschließt. In einem - in der Fig.7 gezeigten - Abfrageschritt 211 wird abgefragt, ob bei der Kommunikation Benutzungsdaten zur Datenzentrale übermittelt wurden. Es ist vorgesehen, daß nach der Übertragung und der Speicherung von Benutzungsdaten im entfernten Speicher im Abfrageschritt 211 einer Systemroutine 200 des Endgerätes festgestellt wird, daß die Daten übermittelt worden sind. Im Schritt 213 kann die Kapazität des Statistikspeichers 16, beispielsweise durch Löschen wiederhergestellt werden. Anschließend wird im Schritt 215 ein Anzeigetext generiert, bevor zum Punkt s der Systemroutine 200 zurückverzweigt wird. Von dem Abfrageschritt 211 kann alternativ auf einen Schritt 214 zur Auswertung der Kommunikation mit teilweiser oder ohne Löschung des Statistikspeichers 16 verzweigt werden.

Die Figur 8 zeigt eine Transaktionsanforderungsroutine im Falle eines Speicherüberlaufes. Hierbei handelt es sich um eine optionale Subroutine zum Statistikmodus 420 (Fig.4). Der Abfrageschritt 420-7 beginnt am Punkt q, d.h. nach Abarbeitung der - in der Figur 4 gezeigten - Schritte 420-5 oder 420-6. Im Abfrageschritt 420-7 wird der Speicherüberlauf festgestellt. Dann wird über die Transaktionsanforderung im Schritt 420-8 zum Punkt g der Figur 2 verzweigt. Anderenfalls wird das Ende 420-9 des Statistikmodus erreicht. Ist ein Statistikspeicher bereits voll, dann kann somit vom Statistikmodus 420 direkt zum Punkt g verzeigt werden, um automatisch in einen Kommunikationsmodus II einzutreten.

Anhand der Figur 2 wurde der Flußplan zur Abspeicherung von Benutzungsdaten im Statistikmodus (Schitte 417 bis 430) erläutert, welcher innerhalb des Frankiermodus 400 abgearbeitet wird. Das erfindungsgemäße Verfahren ist jedoch nicht auf diese spezielle Ausführungsform beschränkt. Eine Abspeicherung von Benutzungsdaten kann grundsätzlich auch nach Abschluß der Frankierdruckroutine oder unmittelbar nach dem Schritt 405 zur Feststellung einer Druckanforderung erfolgen.

Die Erfindung ist nicht auf die vorliegenden Ausführungsformen beschränkt. Vielmehr ist eine Anzahl von Varianten im Rahmen der Ansprüche denkbar. So können offensichtlich weitere andere Ausführungen der Erfindung entwickelt bzw. eingesetzt werden, die vom gleichen Grundgedanken der Erfindung ausgehend, die von den anliegenden Ansprüchen umfaßt werden.

## Patentansprüche

1. Anordnung zur Speicherung von Daten über eine Benutzung eines Endgerätes, mindestens bestehend aus einem Speicher und einem Mikroprozessor, **gekennzeichnet dadurch, daß** ein Statistikspeicher (16) für die in Statistikklassen gespeicherten Benutzungsdaten vorgesehen ist, daß ein Mikroprozessor (6) mit dem Statistikspeicher (16) und einem Programmspeicher (11) verbunden ist, wobei der Mikroprozessor (6) zur automatischen Klassenbildung und zur statistischen Speicherung der Benutzungsdaten und zugehöriger Speicherung eines Zählerstandes programmiert ist.

2. Anordnung, nach Anspruch 1, **gekennzeichnet dadurch, daß** der Mikroprozessor (6) programmiert ist, in einen Statistikmodus und in einen Kommunikationsmodus einzutreten, wobei der Mikroprozessor (6) im Kommunikationsmodus zur Datenübertragung vom Statistikspeicher (16) zu einem entfernten Speicher (31) programmiert ist, wobei die Datenübertragung erfolgt, um entfernt vom Endgerät eine statistische Auswertung der Benutzungsdaten vorzunehmen.

3. Anordnung, nach Anspruch 2, **gekennzeichnet dadurch, daß** der Mikroprozessor (6) programmiert ist, die erforderliche Speicherkapazität im Statistikspeicher (16) wiederherzustellen, wenn die Kommunikation zur Datenübertragung vom Statistikspeicher (16) zu dem entfernten Speicher (31) beendet ist.

4. Anordnung zur Speicherung von Daten über eine Benutzung eines Endgerätes, mindestens bestehend aus einem Speicher und einem Mikroprozessor, **gekennzeichnet dadurch, daß** ein Statistikspeicher (16) für die in Statistikklassen gespeicherten Benutzungsdaten vorgesehen ist, daß ein Mikroprozessor (6) mit dem Statistikspeicher (16) und einem Programmspeicher (11) verbunden ist, wobei der Mikroprozessor (6) programmiert ist, automatisch Daten an eine entfernte Datenzentrale zu übertragen, wenn der Statistikspeicher voll ist.

5. Anordnung, nach den Ansprüchen 1 oder 4, **gekennzeichnet** t **dadurch**, daß ein Parameterspeicher (5a-01) in einem Speicherbereich eines nichtflüchtigen Speichers (5a) gebildet wird, wobei nach der Erfassung von aktuellen Benutzungsdaten durch den Mikroprozessor (6) die Art und der Wert der aktuellen Benutzungsinformation im Parameterspeicher (5a) als Daten gespeichert werden, daß der Statistikspeicher (16) separat von dem nichtflüchtigen Speicher (5a) für die Postregister angeordnet ist, wodurch die Benutzungsdaten in der vorgenannten Form und unabhängig von Abrechnungsdaten gespeichert werden.

6. Anordnung, nach den Ansprüchen 1 oder 4, **gekennzeichnet** t **dadurch**, daß das Endgerät eine Frankiermaschine oder eine computergesteuerte Einrichtung zum Frankieren ist.

7. Verfahren zur Speicherung von Daten über eine Benutzung eines Endgerätes, **gekennzeichnet** d u r c h folgende Schritte:
- Eintritt (420-1) in den Statistikmodus (420) zur statistischen Speicherung der Benutzungsdaten,
- Aufrufen (420-2) einer aktuellen Parameterkombination aus dem Parameterspeicher (5a-01) und Durchführen eines Vergleichs (420-3), ob entsprechend dieser Parameterkombination schon eine Statistikklasse COMₘ von gespeicherten Kombinationen im Statistikspeicher (16) existiert, wobei jeder gespeicherten Kombination ein Zählerstand Zₘ zugeordnet ist,
- Erhöhung (420-5) des Zählerstandes Zₘ im Statistikspeicher (16) um eins, wenn im Schritt (420-3) festgestellt wird, daß eine Statistikklasse gemäß der oben genannten gespeicherten Kombinationen im Statistikspeicher (16) existiert, oder falls diese noch nicht existiert
- automatische Bildung (420-4) einer neuen Statistikklasse COMₙ und deren Speicherung im Statistikspeicher (16) und Setzen eines zur neuen Statistikklasse COMₙ zugeordneten Zahlerstandes Zₙ auf einen Startwert.

8. Verfahren, nach Anspruch 7, **gekennzeichnet** t **dadurch**, daß nach der Speicherung eines inkrementierten Zählerstandes Zₘ oder eines Datensatzes mit Benuzungsdaten und zugeordneten Zahlerstand Zₙ im Statistikmodus (420) vom Mikroprozessor geprüft wird, ob noch genug Platz im Statistikspeicher für weitere Benutzungsdaten vorhanden ist, wobei der Mikroprozessor automatisch eine Verbindung zur Datenzentrale herstellen kann, um die Statistikdaten vom Speicher einer Frankiermaschine in einen Speicher der Datenzentrale zu laden.

9. Verfahren, nach Anspruch 8, **gekennzeichnet** t **dadurch**, daß die Übertragung der Datensätze an die Datenzentrale nach Zeitablauf oder bei Überlauf des Statistikspeichers automatisch erfolgt.

## Claims

1. An arrangement for the storage of data about the utilization of a terminal device, comprising at least a memory and a microprocessor, **characterized in that** there is provided a statistics memory (16) for the utilization data stored in statistics classes, and that a microprocessor (6) is connected with the statistics memory (16) and a program memory (11), said microprocessor (6) being programmed for an automatic formation of classes and for a statistical storage of the utilization data and the related storage of a counter reading.

2. An arrangement according to Claim 1, **characterized** i n that the microprocessor (6) is programmed for entering a statistics mode and a communication mode, wherein, in the communication mode, microprocessor (6) is programmed for the transmission of data from the statistics memory (16) to a remote memory (31), said data transmission being made for performing a statistical analysis of the utilization data remotely from the terminal device.

3. An arrangement according to Claim 2, **characterized in that** the microprocessor (6) is programmed for re-establishing the required storage capacity in the statistics memory (16) when the communication for data transfer from the statistics memory (16) to the remote memory (31) has been completed.

4. An arrangement for the storage of data about the utilization of a terminal device, comprising at least a memory and a microprocessor, **characterized in that** there is provided a statistics memory (16) for the utilization data stored in statistics classes, and that a microprocessor (6) is connected with the statistics memory (16) and a program memory (11), said microprocessor (6) being programmed for an automatic transmission of data to a remote data central when the statistics memory is full.

5. An arrangement according to Claims 1 or 4, **characterized in that** a parameter memory (5a-01) is formed in a storage area of the non-volatile memory (5a), wherein, after the collection of current utilization data by microprocessor (6), the type and the value of the current utilization information are stored in the parameter memory (5a) as data; and that the statistics memory (16) is arranged separately from the non-volatile memory (5a) for the post registers, so that the utilization data are stored in the above-mentioned form and separately from accounting data.

6. An arrangement according to Claims 1 or 4, **characterized in that** the terminal device is a franking machine or a computer-controlled franking device.

7. A method for the storage of data about the utilization of a terminal device, **characterized by** the following steps:
- entering (420-1) of the statistics mode (420) for the statistical storage of the utilization data;
- calling (420-2) of a current parameter combination from the parameter memory (5a-01) and comparison (420-3) whether, according to said parameter combination, there does already exist a statistics class COMₘ of stored combinations in the statistics memory (16), wherein a counter reading Zₘ is assigned to every combination stored;
- increase (420-5) of the counter reading Zₘ in the statistics memory (16) by one if it is found in step (420-3) that a statistics class according to the above-mentioned stored combination exists in the statistics memory (16); or, if such class does not exist
- automatic generation (420-4) of a new statistics class COMₙ and its storage in the statistics memory (16) and setting a counter reading Zₙ assigned to the new statistics class COMₙ to a start value.

8. A method according to Claim 7, **characterized in that**, after the storage of an incremented counter reading Zₘ or of a data record with utilization data and an assigned counter reading Zₙ, it is checked by the microprocessor in the statistics mode (420) whether there is still enough space in the statistics memory for further utilization data, wherein the microprocessor can automatically establish a connection to the data center for loading the statistical data from the memory of a franking machine into a memory of the data central.

9. A method according to Claim 8, **characterized in that** the transmission of the data records to the data central is carried out automatically after a certain period or upon overflow of the statistics memory.

## Revendications

1. Disposition pour le stockage de données via l'utilisation d'un terminal, comprenant au moins une mémoire et un microprocesseur, **caractérisée en ce qu'**une mémoire statistique (16) est prévue pour les données d'utilisation enregistrées dans les classes de statistiques, **en ce qu'**un microprocesseur (6) est connecté avec la mémoire statistique (16) et avec une mémoire de programme (11), tandis que le microprocesseur (6) est programmé pour la formation automatique de classe et pour la mise en mémoire statistique des données d'utilisation et d'une mémoire apparentée d'une position du compteur.

2. Disposition, selon la spécification 1, **caractérisée en ce que**, le microprocesseur (6) est programmé, afin d'entrer dans un mode de statistique et dans un mode de communication, tandis que le microprocesseur (6) est programmé dans un mode de communication pour la transmission de données de la mémoire statistique (16) à une mémoire à distance (31), tandis que la transmission de données s'effectue, afin de procéder à une exploitation statistique des données d'utilisation à distance du terminal.

3. Disposition, selon la spécification 2, **caractérisée en ce que**, le microprocesseur (6) est programmé, afin de restaurer la capacité de mémoire dans la mémoire statistique (16) lorsque, la communication pour la transmission de données de la mémoire statistique (16) à la mémoire à distance (31) est terminée.

4. Disposition pour le stockage de données via une utilisation d'un terminal, comprenant au moins une mémoire et un microprocesseur, **caractérisée en ce qu'**une mémoire statistique (16) est prévue pour les données d'utilisation enregistrées dans les classes de statistique, **en ce qu'**un microprocesseur (6) est connecté avec la mémoire statistique (16) et avec une mémoire de programme (11), tandis que le microprocesseur (6) est programmé, afin de transmettre automatiquement les données à une centrale de données à distance, lorsque la mémoire statistique est pleine.

5. Disposition, selon la spécification 1 ou 4, **caractérisée en ce qu'**une mémoire paramétrique (5a-01) est constituée dans une zone de mémoire d'une mémoire non volatile (5a), tandis que le type et la valeur de l'actuelle information d'utilisation sont enregistrés dans la mémoire paramétrique (5a) comme données, après la saisie des données d'utilisation actuelles par un microprocesseur (6), **en ce que** la mémoire statistique (16) est disposée à part de la mémoire non volatile (5a) pour le registre postal, par lequel les données d'utilisation sont enregistrées dans la forme susmentionnée et indépendamment des données comptabilité.

6. Disposition, selon la spécification 1 ou 4, **caractérisée en ce que**, le terminal est une machine à affranchir ou un dispositif d'affranchissement piloté par ordinateur.

7. Procédé pour le stockage de données via une utilisation d'un terminal, **caractérisé par** les étapes suivantes:
- Entrée (420-1) dans le mode de statistique (420) pour la mémorisation statistique des données d'utilisation,
- Appel (420-2) d'une combination de paramètres actuelle de la mémoire paramétrique (5a-01) et réalisation d'une comparaison (420-3), à savoir s'il existe déjà une classe de statistique COMₘ des combinations enregistrées dans la mémoire statistique (16), conformément à cette combination paramétrique, tandis qu'une position du compteur Zₘ de chaque combination enregistrée est classée,
- Augmentation (420-5) de la position du compteur Zₘ dans la mémoire statistique (16) à un, lorsqu'il est établi au pas (420-3) qu'une classe de statistique existe dans la mémoire statistique (16), selon les combinations enregistrées mentionnées ci-dessus, ou dans le cas où elle n'existerait pas encore,
- Constitution automatique (420-4) d'une classe de statistique COMₙ et de sa mémorisation dans la mémoire statistique (16) et, forçage à une valeur de lancement d'une position du compteur Zₙ classée pour la nouvelle classe de statistique COMₙ.

8. Procédé, selon la spécification 7, **caractérisé en ce qu'**une vérification est effectuée, après la mémorisation d'une position du compteur Zₘ incrémentée ou d'un enregistrement logique avec des données d'utilisation et une position de compteur Zₙ classée dans le mode de statistique (420) du microprocesseur, pour savoir s'il y a encore assez de place dans la mémoire statistique pour d'autres données d'utilisation, tandis que le microprocesseur peut établir automatiquement une connexion avec la centrale de données, afin de charger les données statistiques de la mémoire d'une machine à affranchir le courrier dans une mémoire de la centrale de données.

9. Procédé, selon la spécification 8, **caractérisé en ce que**, la transmission des enregistrements logiques à la centrale de données s'effectue automatiquement après un laps de temps ou lors d'un dépassement de capacité de la mémoire statistique.
